Europäisches Patentamt

European Patent Office

Office européen des brevets

(11) Veröffentlichungsnummer: **0 192 248**
**A2**

(12) ## EUROPÄISCHE PATENTANMELDUNG

(21) Anmeldenummer: 86102129.3

(22) Anmeldetag: 19.02.86

(51) Int. Cl.⁴: **B 32 B 17/10**
**C 03 C 27/12**

(30) Priorität: 22.02.85 DE 3506133

(43) Veröffentlichungstag der Anmeldung:
27.08.86 Patentblatt 86/35

(84) Benannte Vertragsstaaten:
AT BE CH DE FR GB IT LI SE

(71) Anmelder: FLACHGLAS AKTIENGESELLSCHAFT
Otto-Seeling-Promenade 10-14
D-8510 Fürth(DE)

(72) Erfinder: Nolte, Hans-Henning
Beethovenstrasse 29
D-4650 Gelsenkirchen(DE)

(72) Erfinder: Von Reis, Wolf
Steeler Strasse 34
D-4650 Gelsenkirchen(DE)

(74) Vertreter: Andrejewski, Walter et al,
Patentanwälte Dipl.-Phys. Dr. Walter Andrejewski
Dipl.-Ing. Dr.-Ing. Manfred Honke Dipl.-Phys. Dr. Karl
Gerhard Masch Theaterplatz 3, Postfach 10 02 54
D-4300 Essen 1(DE)

(54) Brandschutzfüllung für Glasbauelemente aus Wasser und zumindest einem Cellulose-Derivat.

(57) Verwendung einer Mischung aus hauptsächlich Wasser und zumindest einem Cellulose-Derivat als lichtdurchlässige Brandschutzfüllung für Glasbauelemente mit zumindest einem Hohlraum. Die Mischung weist durch den Mengenanteil an Cellulose-Derivat eine feste Konsistenz auf. Der Mischung ist ein Konservierungsmittel beigegeben.

EP 0 192 248 A2

"Brandschutzfüllung für Glasbauelemente aus
Wasser und zumindest einem Cellulose-Derivat"

Die Erfindung bezieht sich allgemein auf ein Glasbauelement mit zumindest einem Hohlraum sowie mit einer hauptsächlich aus Wasser bestehenden Brandschutzfüllung in dem Hohlraum. - Glasbauelement meint alle aus Glas bestehenden und einen offenen oder geschlossenen Hohlraum aufweisenden Bauteile, die bei Bauwerken eingesetzt werden und ausschließlich oder neben anderen Zwecken eine Brandschutzfunktion erfüllen. Die Glasbauelemente können außerdem als wandbildende Bauteile, Fenster oder dergleichen eingesetzt werden. Insbesondere handelt es sich um Isolierglaseinheiten, Glasbausteine, Profilglaselemente, auch in Form von U-Profilen, Isolierglaseinheiten im Sinne einer Isolierung gegen Brandeinwirkung. Der Brandschutz tritt ein, weil bei solchen Glasbauelementen unter der Einwirkung thermischer Strahlung Wasser verdampft, wobei die Verdampfungswärme und der frei werdende Wasserdampf den Brandschutz bewirken. Bei der Einwirkung der thermischen Strahlung zerspringt zumindest eine der Glaswände, beispielsweise eine der Glasscheiben.

Bei bekannten Glasbauelementen der beschriebenen Funktion (DE-PS 27 13 849) handelt es sich um Isolierglaseinheiten aus wenigstens zwei parallelen, auf Abstand zueinander gehaltenen Glasscheiben, zwischen denen eine Wasser, ein wasserlösliches Salz, welches unter der Wirkung thermischer Strahlung einen isolierenden Schaum bildet, und ein stabilisierendes Polymer enthaltende Schicht angeordnet ist. Die Schicht besteht aus einem Hydrogel und weist 65 bis 95 Gew.-% freies Wasser sowie 1 bis 20 Gew.-% des Salzes auf, wobei das stabilisierende Polymer als Gelbildner funktioniert. Bei der bekannten Ausführungsform stört, daß die Brandschutzfüllung lediglich aus einem Gel be-

- 2 -

steht. Zwar soll das Gel so fest sein, daß bei Zerstörung einer der Glasscheiben die Schicht nicht ausläuft, solche Gele sind jedoch schon unter dem Einfluß nichtbrandbedingter thermischer Strahlung nicht ausreichend alterungsbeständig. Durch Alterung tritt eine störende Beeinträchtigung der Lichtdurchlässigkeit ein. Die bekannten Glasbauelemente sind insoweit nicht hinreichend thermisch stabil. Andererseits verlangt die Praxis einwandfreie Lichtdurchlässigkeit bis zum Wirksamwerden der Brandschutzfunktion.

Für andere Zwecke, nämlich für feuerfeste Beschichtungen, kennt man Mischungen (EP-A 00 84 266), die Wasser, gebunden zu Wasserglas, und zumindest ein Cellulose-Derivat aufweisen. Die aus dem Wasserglas und dem Cellulose-Derivat aufgebaute Mischung dient lediglich als Binder für die Herstellung eines besonderen Betons, wobei als Zuschlagstoff körnige Substanzen eingesetzt werden, die Wasser durch Absorption festhalten (z. B. geblähtes Vermiculit oder Perlit) oder die Wasser als Kristallwasser enthalten. Die Zuschlagstoffe sind dabei so ausgewählt, daß sie bei Einwirkung thermischer Strahlung und bei Temperaturen von über 100° C das durch Absorption gebundene Wasser bzw. das Kristallwasser leicht abgegeben. Eine lichtdurchlässige Brandschutzfüllung ist auf diese Weise nicht herstellbar. Hinzu kommt, daß die Masse aus Wasserglas und dem organischen Bindemittel allein nicht ohne weiteres hinreichend thermostabil ist.

- 3 -

Im übrigen werden Cellulose-Derivate als Werkstoffe für die Herstellung der verschiedensten Gegenstände, insbesondere als Werkstoffe für durch Gießen oder durch Strangpressen herstellbare Gegenstände, eingesetzt. Hauptsächlich aus Wasser und zumindest einem Cellulose-Derivat bestehende Mischungen dienen als Bindemittel oder Kleber in den verschiedensten Bereichen der Technik. Zur Weiterentwicklung von Glasbauelementen mit lichtdurchlässiger Brandschutzfüllung haben diese bekannten Anwendungen von Cellulose-Derivaten bisher nichts beigetragen.

Der Erfindung liegt die Aufgabe zugrunde, eine Brandschutzfüllung für Glasbauelemente mit zumindest einem Hohlraum anzugeben, die sich durch thermische Stabilität und einwandfreie Lichtdurchlässigkeit, auch bei langfristigem Einsatz auszeichnet.

Zur Lösung dieser Aufgabe ist Gegenstand der Erfindung die Verwendung einer Mischung aus hauptsächlich Wasser und zumindest einem Cellulose-Derivat als lichtdurchlässige Brandschutzfüllung für Glasbauelemente mit zumindest einem Hohlraum mit der Maßgabe, daß die Mischung durch den Mengenanteil als Cellulose-Derivat eine feste Konsistenz aufweist und mit der weiteren Maßgabe, daß der Mischung ein Konservierungsmittel beigegeben ist. Im allgemeinen enthält die Mischung etwa 5 bis 20 Gew.-% von zumindest einem Cellulose-Derivat, Rest Wasser und Konservierungsmittel. Eine bevorzugte Ausführungsform der Erfindung ist durch die weitere Maßgabe gekennzeichnet, daß das Cellulose-Derivat Hydroxyethylcellulose ist. Arbeitet man mit diesem Cellulose-Derivat, so soll die Mischung etwa 10 Gew.-% Hydroxyethylcellulose enthalten. Das Konservierungsmittel wird

– 4 –

zweckmäßigerweise aus einem Stoff der Gruppe Kupfersulfat, Kupferacetat, Benzoesäure, oder Mischungen davon ausgewählt. Arbeitet man mit einem solchen Konservierungsmittel, so reichen im allgemeinen etwa 0,05 Gew.-%.

Die Erfindung nutzt die überraschende Tatsache, daß die angegebene Mischung nach Verfestigung bis zu einer Festkörperbrandschutzfüllung eine überraschend hohe thermische Stabilität aufweist, so daß eine Beeinträchtigung der Lichtdurchlässigkeit auch langfristig nicht mehr eintritt. Die Mischung kann im flüssigen Zustand in den Hohlraum des Glasbauelementes eingegossen werden und in diesem verfestigen. Zu der Alterungsbeständigkeit trägt das Konservierungsmittel wesentlich bei. Von Vorteil ist fernerhin, daß die Festkörperbrandschutzfüllung zur Gestaltfestigkeit des Glasbauelementes insgesamt mechanisch beiträgt, so daß dieses erhebliche mechanische Beanspruchungen aufzunehmen in der Lage ist. Nichtsdestoweniger kann das Glasbauelement aus verhältnismäßig dünnwandigem Glas aufgebaut werden, welches bricht, wenn die Funktion als Brandschutzschicht wahrgenommen werden muß und Wasserdampf austritt. Um Transparenz und Festigkeit zu verbessern, kann der Brandschutzfüllung zwischen 0,1 und 5 Gew.-% vernetzte Polyacrylnitrilcarbonsäure beigegeben werden.

Im Rahmen der Erfindung liegt die unter anderem für die Frostbeständigkeit wesentliche weitere Maßgabe, daß 5 bis 30 Gew.-% Calciumchlorid und/oder 0,5 bis 5 Gew.-% Natriumalginat zusätzlich beigegeben werden. Als Cellulose-Derivate können auch eingesetzt werden

Methyl-Hydroxyethylcellulose, Natrium-Carboxy-Methyl-cellulose, Carboxy-Methyl-Cellulse, Methyl-Cellulose, Methyl-Hydroxyalkülcellulose

oder Mischungen davon.

– 6 –

Patentansprüche:

1. Verwendung einer Mischung aus hauptsächlich Wasser und zumindest einem Cellulose-Derivat

als lichtdurchlässige Brandschutzfüllung für Glasbauelemente mit zumindest einem Hohlraum

m i t   d e r   M a ß g a b e, daß die Mischung durch den Mengenanteil an Cellulose-Derivat eine feste Konsistenz aufweist und mit der weiteren Maßgabe, daß der Mischung ein Konservierungsmittel beigegeben ist.

2. Verwendung nach Anspruch 1, mit der weiteren Maßgabe, daß das Cellulose-Derivat Hydroxyethylcellulose ist.

3. Verwendung nach Anspruch 2, mit der weiteren Maßgabe, daß die Mischung etwa 10 Gew.-% Hydroxyethylcellulose enthält.

4. Verwendung nach einem der Ansprüche 1 bis 3, mit der weiteren Maßgabe, daß das Konservierungsmittel aus einem Stoff der Gruppe Kupfersulfat, Kupferacetat, Benzoesäure, oder Mischungen davon, besteht.

5. Verwendung nach einem der Ansprüche 1 bis 4, mit der weiteren Maßgabe, daß 0,1 bis 5 Gew.-% vernetzte Polyacrylnitrilcarbonsäure zusätzlich beigegeben werden.

- 7 -

6. Verwendung nach einem der Ansprüche 1 bis 5, mit der weiteren Maßgabe, daß 5 bis 30 Gew.-% Calciumchlorid und/oder 0,5 bis 5 Gew.-% Natriumalginat zusätzlich beigegeben werden.